# EUROPÄISCHE PATENTANMELDUNG

(11) **EP 1 852 189 A2**
(43) Veröffentlichungstag der Anmeldung: **07.11.2007**
(21) Anmeldenummer: 07008640.0
(22) Anmeldetag: 27.04.2007
(51) Int. Cl.: B02C 23/04, B02C 13/31, B02C 13/30

(54) **Anlagenkonzept für Mühlen und Sichter mit Magnetlagerspindelantrieb**

(30) Priorität: 06.05.2006 DE 102006021195; 06.05.2006 DE 102006021196; 06.05.2006 DE 102006021197
(71) Anmelder: HOSOKAWA ALPINE Aktiengesellschaft, 86199 Augsburg (DE)
(72) Erfinder: Konetzka, Georg, Dipl.-Ing., 86199 Augsburg (DE); Ludewig, Karsten, Dipl.-Ing., 86391 Stadtbergen (DE); Stahl, Jürgen, Dipl.-Ing., 86497 Horgau-Auerbach (DE)

(57) **Zusammenfassung**

Die Erfindung betrifft ein Anlagenkonzept für verfahrenstechnische Maschinen wie Mühlen oder Sichter in geschlossener Bauweise ohne Drehdurchführungen zwischen Umgebung und Anlageninnenbereich. Dieses Anlagenkonzept ist besonders geeignet für CIP- (clean in place) und SIP- (sterilisation in place) Betrieb, Handschuhkasten-Betrieb und Kombinationen daraus. Des Weiteren betrifft sie eine Kapselung der Mühlen und Sichter, mit Magnetlagerspindelantrieb, um die unterhalb der Auskleidung bzw. Ummantelung liegenden Komponenten des Magnetlagerspindelantriebes gegen den Arbeitsraum der Welle im Magnetlagerspindelgehäuse abzudichten. Der Magnetlagerspindelantrieb ist so gestaltet, dass die Magnetlagerspindelwelle herausziehbar ausgebildet ist, damit ein einfacher und schneller Werkzeugwechsel sowie eine gründliche Reinigung erfolgen können.

## Beschreibung

Die Erfindung betrifft ein Anlagenkonzept für verfahrenstechnische Maschinen in geschlossener Bauweise ohne Drehdurchführungen zwischen Umgebung und Anlageninnenbereich. Hierbei finden Maschinen, speziell Mühlen und Sichter mit Magnetlagerspindelantrieb Verwendung, die entsprechend gekapselt sind. Der Magnetlagerspindelantrieb ist so gestaltet, dass die Magnetlagerspindelwelle herausziehbar ausgebildet ist, ohne dass das Magnetlagerspindelgehäuse zerlegt werden muss, damit ein einfacher und schneller Werkzeugwechsel sowie eine gründliche Reinigung erfolgen kann.

### Stand der Technik

Die EP 1 300 195 A1 beschreibt eine Pulververarbeitungsanlage die in einem Handschuhkasten betrieben wird. Dabei sind die Arbeitsräume und die Werkzeuge der Maschinen im Innenbereich des Handschuhkastens und die Lagerungen und Antriebe der Maschinen außerhalb des Handschuhkastens angeordnet. Die Wellen der Maschinen reichen von außerhalb des Handschuhkastens über Drehdurchführungen bis in den Arbeitsraum der Maschinen, dort nehmen sie die entsprechenden Werkzeuge auf. Um zu vermeiden, dass Material vom Arbeitsraum in die Lagerung bzw. die Umgebung tritt oder umgekehrt erfolgt eine Abdichtung der Wellen in der Form von zwei Spülspalten, wobei einer Arbeitsraum und einen Zwischenraum trennt und der andere den Zwischenraum von der Umgebung.

Maschinen mit Magnetlagern oder Magnetlagerspindelantrieb sind bekannt. In der WO 99/19070 A1 wird ein Refiner mit einem entsprechenden Antrieb beschrieben. Der Refiner weist einen Rotor, bestehend aus einer Welle mit Refiner-Elementen, sowie komplementären Statorelementen auf, welche zusammen mit den rotierenden Elementen einen Spalt bilden, in denen eine Aufschlämmung behandelt wird. Die Welle des Rotors wird von Magnetlagern gehalten, welche gleichzeitig die Lage der Welle in axialer und radialer Richtung definieren. Zur Lagerung und Positionierung der Welle in axialer Richtung weist die Welle eine scheibenförmige Erweiterung auf. Vor und hinter dieser Erweiterung sind Magnetlager mit axialer Wirkrichtung angeordnet. Neben der Positionierung der Welle in axialer Richtung wird eine Einstellung des Mahlspaltes ermöglicht.

### Aufgabenstellung

Aufgabe der Erfindung ist es, ein Konzept für eine Anlage bestehend aus verfahrenstechnischen Maschinen wie Mühlen oder Sichter, zu schaffen, das allen Anforderungen eines Reinraum-, Handschuhkasten-, SIP- oder CIP-Betriebes und Kombinationen daraus entspricht indem es keine Drehdurchführungen zwischen Produktraum und Umgebung aufweist.
Weiterhin ist es Aufgabe der Erfindung, eine verfahrenstechnische Maschine mit Magnetlagerspindelantrieb zu schaffen bei der ein Eindringen von Verunreinigungen in den Arbeitsraum sowie von Produkt aus dem Arbeitsraum heraus verhindert wird. Diese Aufgabe wird durch ein Anlagenkonzept mit den Merkmalen des Anspruches 1 gelöst.

### Beschreibung der Erfindung

An den Betrieb von Anlagen in der pharmazeutischen Industrie werden hohe Anforderungen gestellt. So sollen Produktverunreinigungen von außen und durch Komponenten der Anlage minimiert bzw. vermieden werden. Außerdem sind Betreiber bzw. Anlagenführer vor Kontakt mit den herzustellenden hochwirksamen Substanzen bestmöglich zu schützen. Es soll eine rückstandsfreie Reinigung der Anlage möglich sein, die Anlage, speziell die Maschinen, sollen für SIP- und CIP-Betrieb ausgerüstet sein.

Bei der erfindungsgemäßen Anlage wird dies erreicht indem ein Antriebskonzept gewählt wird, dass keine Drehdurchführungen in den Außenbereich der Anlage benötigt. Eine solche Anlage besteht aus verfahrenstechnischen Maschinen mit unterschiedlichen Funktionen wie u.a. Mühlen oder Sichter. Die nach außen dichtende Hülle der Anlage besteht in der Regel aus Maschinengehäuse, Gehäuse zur Werkzeugaufnahme, Apparaten ohne rotierende Teile, Behältern, Leitungen und Verbindungselementen mit statischen Dichtungen. Das System ist so gegen die Umgebung abgedichtet, aber auch gegen die Komponenten wie Lagerung und Antrieb. Material und Produkt werden über Schleusensysteme zu- und abgeführt.

Bei der erfindungsgemäßen Vorrichtung ist, im Gegensatz zu den bekannten Maschinen, die Magnetlagerspindelgehäuseinnenwand ausgekleidet und die Magnetlagerspindelwelle ummantelt, dadurch werden die unterhalb der Auskleidung bzw. Ummantelung liegenden Komponenten des Magnetlagerspindelantriebes gegen den Arbeitsraum der Welle im Magnetlagerspindelgehäuse abgedichtet. In der Arzneimittelherstellung werden hierfür bevorzugt pharmagerechte Kunststoffe oder auch Edelstahl eingesetzt. Die Auskleidung des Magnetlagerspindelgehäuses umfasst ein Spaltrohr welches die Komponenten von Lagern und Motor gegen den Arbeitsraum der Welle abdichtet. Die Gegenkomponenten auf der Welle werden mittels Ummantelung gegen den Arbeitsraum abgedichtet. Das Spaltrohr dichtet dadurch auch die produktberührten Bereiche von der Umgebung ab. Die erfindungsgemäße Vorrichtung weist somit zwischen Umgebung und produktberührtem Bereich keine Drehdurchführung auf, durch die es zum Beispiel zu einem Produkttransport aus der Mühle kommen kann. In einer weiteren Maßnahme wird der Spaltraum vom Arbeitsraum der Mühle durch eine Spaltspülung getrennt. Diese hat die Aufgabe ein Eindringen von Produkt in den Spaltraum zu verhindern.

Die erfindungsgemäßen verfahrenstechnischen Maschinen, wie Mühlen oder Sichter, zeichnen sich dadurch aus, dass durch Öffnen des Maschinengehäuses die produktberührten Bereiche mit dem rotierenden Arbeitsteil, wie Sichtrad oder Mahlscheibe, freigegeben werden. Die Magnetlagerspindelwelle und das Werkzeug bilden eine Einheit. Die Magnetlagerspindelwelle ist verjüngend ausgebildet, wobei sie auf der Werkzeugseite ihren größten Durchmesser aufweist. Die Radiallager und der Motor sind konzentrisch zur Welle im Gehäuse angeordnet. Alle Komponenten und die Gegenkomponenten sind ringförmig ausgebildet. Die Gegenkomponenten der Lager und des Motors auf der Magnetlagerspindelwelle sind im Wirkungsbereich von Motor und Lager angeordnet. Diese Gestaltung ermöglicht es die Magnetlagerspindelwelle zusammen mit dem Arbeitsteil aus dem Lagergehäuse herauszuziehen. Welle und Arbeitsteil können nun außerhalb der Maschine gereinigt werden. Ebenso können die produktberührten Bereiche des Arbeitsraumes gründlich gereinigt werden, ohne dass das Arbeitsteil die Reinigung behindert oder Produkt zwischen Arbeitsteil und Arbeitsraumwand zurück bleibt. Für einen Werkzeugwechsel kann der gesamte Rotor bestehend aus Welle und Arbeitsteil ausgetauscht werden, so können Wartungszeiten minimiert werden.

Weitere Besonderheiten und Vorzüge der Erfindung ergeben sich aus der folgenden Beschreibung eines bevorzugten Ausführungsbeispiels anhand der Zeichnungen. Es zeigen:
Fig. 1 Schematische Darstellung einer Mahlsichtanlage.
Fig. 2 Ausschnitt aus Fig. 1
Fig. 3 Ausschnitt aus Fig. 1 mit Spülleitungen für den CIP- und SIP-Betrieb
Fig. 4 Kapselung einer Stiftmühle mit Magnetlagerspindelantrieb im Längsschnitt.
Fig. 5 eine Stiftmühle mit Magnetlagerspindelantrieb im Längsschnitt
Fig. 6 Mühle aus Fig. 5 in der Draufsicht

### Ausführungsbeispiel

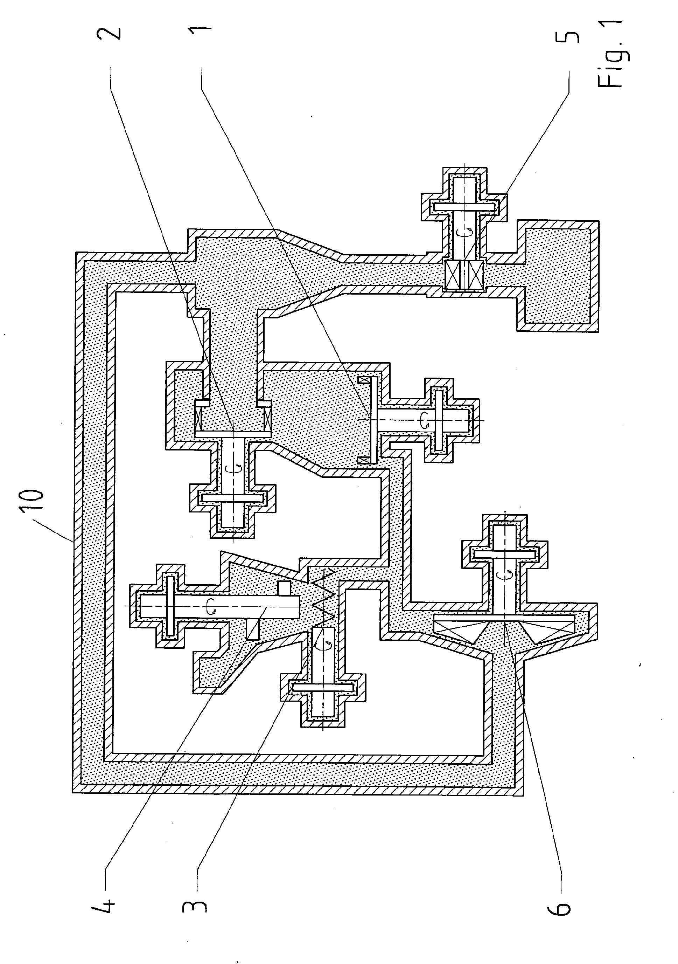

Die Fig. 1 zeigt beispielhaft ein Schema einer Mahl- und Sichtanlage mit den Komponenten Mühle (24), dynamischem Sichter (2), Mischer (4), Zellenradschleuse (5), Gebläse (6), Dosierschnecke (3) mit nach außen abgedichtetem Aufgabebehälter und abgedichtetem Produktbehälter für den diskontinuierlichen Betrieb. Sie besitzt eine alle Komponenten integrierende nach außen dichtende Hülle. Die Anlage kann z.B. in einem hier nicht dargestellten Handschuhkasten eingebaut sein.
Für den Antrieb der Apparate sind hier gekapselte Magnetlagerspindelantriebe eingesetzt. Sie besitzen keine Drehdurchführungen für einzelne Maschinenelemente wie Wellen. Dadurch kann auf aufwändige Lagerspülsysteme zwischen den außerhalb des Reinraum befindlichen Antrieben und den innerhalb befindlichen Maschinenkomponenten zur Vermeidung des Austausches von Produkt und/oder Verunreinigungen zwischen Umgebung und Produktraum verzichtet werden.

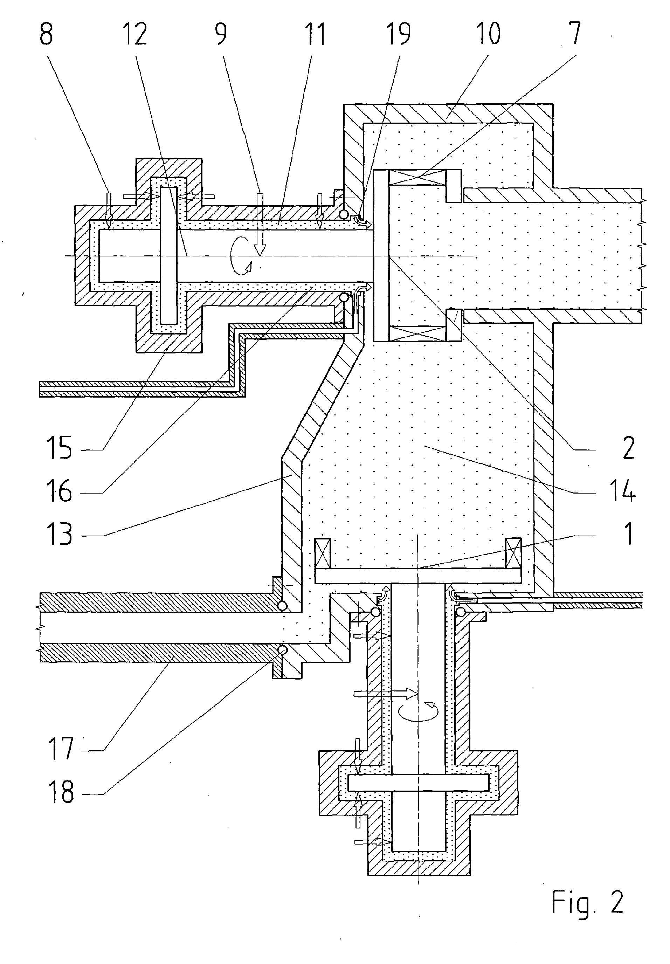

Die Fig. 2 zeigt einen Ausschnitt aus der Anlage, die in Fig.1 dargestellt ist. Ein Magnetlagerspindelantrieb sorgt für die Energiezuführungen zur Lagerstabilisierung (8) und Rotation (9) der Werkzeuge (7) der verfahrenstechnischen Maschinen, die durch die gemeinsame und nach außen dichte Hülle (10) und die Spalte (11) auf die energieaufnehmenden Teile (12) der Werkzeuge erfolgt. Die gemeinsame und nach außen dichtende Hülle (10) besteht in der Regel aus dem Maschinengehäuse (13), das den produktberührten Arbeitsraum (14) bildet, Gehäuse (15) zur Werkzeugaufnahme, das mit dem energieaufnehmenden Teil des Werkzeuges den Spaltraum (16) begrenzt, Apparaten ohne rotierendes Teil, Behältern, verbindende Leitungen (17) und Verbindungselementen mit statischen Dichtungen (18). Für den kontinuierlichen Betrieb können Produkt und Arbeitsmedien der Anlage über Schleusensysteme zu- und abgeführt werden.

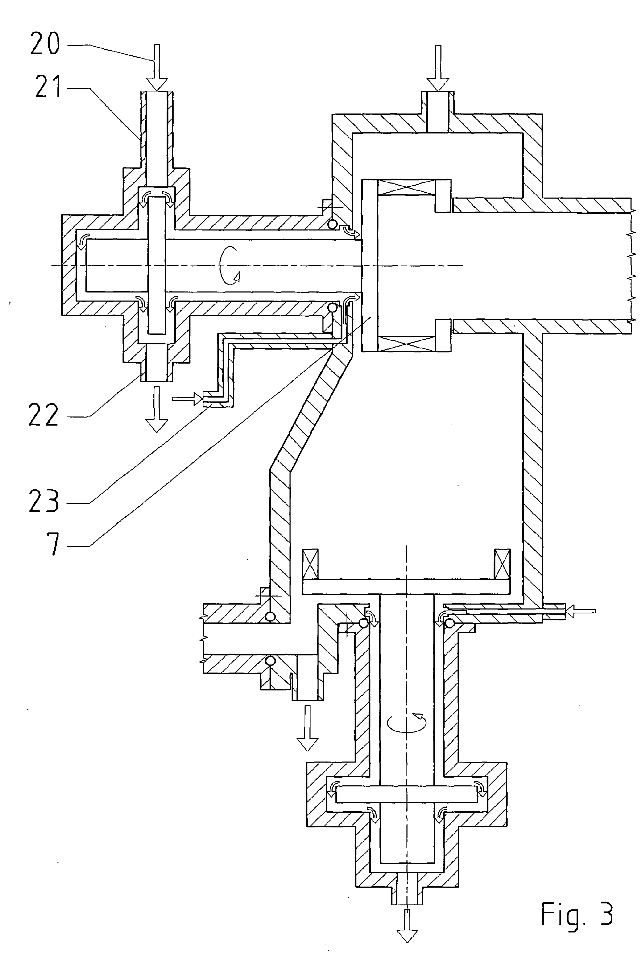

In Figur 3 ist ein Ausschnitt aus der Anlage aus Fig. 1 dargestellt wie er für den CIP-und SIP- Betrieb Anwendung findet. Für die Zuführung von Reinigungs- und Sterilisierungsmitteln (20) sind Leitungszuführungen (21) an den höchsten Lagen von Kammern angebracht. In den tiefsten Lagen von Senken sind Leitungsabführungen (22) angebracht. Die Spülleitungen (23) können im SIP- und CIP-Betrieb in den Reinigungs-, Sterilisations- und Trocknungsprozess mit einbezogen werden., Schwebezustand oder langsame Drehbewegung der Werkzeuge (7) unterstützen den Prozess.

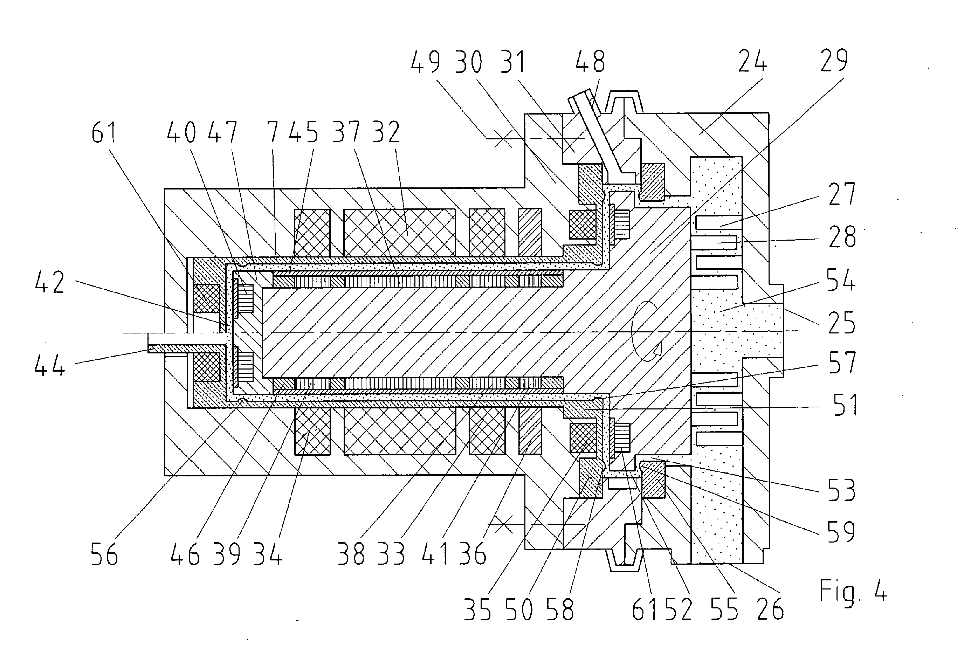

Die Fig. 4 zeigt eine mit einem Magnetlagerspindelantrieb ausgerüstete Stiftmühle. Die Mühle besteht aus einem Mühlengehäuse (24) mit Einlauf (25) und Produktaustrag (26), das die statische Stiftscheibe (27) aufnimmt. Die dynamische Stiftscheibe (28) wird von der Magnetlagerspindelwelle (29) aufgenommen. Mühlengehäuse (24) und Magnetlagerspindelantrieb sind über ein Verbindungselement verschwenkbar miteinander verbunden.

Der Magnetlagerspindelantrieb besteht aus dem Magnetlagerspindelgehäuse (30) mit Zwischenring (31), welches die Komponenten Motor (32), Radiallager mit Wegmesssystem A (33), Radiallager mit Wegmesssystem B (34), Axiallager A (35) und das axiale Wegmesssystem (36) sowie einer Magnetlagerspindelwelle (29) aufnimmt. Auf der Magnetlagerspindelwelle (29) sind die Gegenkomponenten von Motor (37), Lagern (38, 39, 40) sowie Wegmesssystemen (41) angeordnet. Die Welle (29) nimmt das Arbeitsteil, hier die dynamische Stiftscheibe (28), der Maschine auf. Die Magnetlagerspindelwelle (29) ist im Magnetlagerspindelgehäuse (30) im Zentrum der oben beschriebenen Komponenten angeordnet. Die Gegenkomponenten (38, 37,39) von Motor und Lagern auf der Magnetlagerspindelwelle (29) sind im Wirkbereich von Motor (32) Radiallager (33, 34) und Axiallager (35, 42) angeordnet. Die Innenkontur des Magnetlagerspindelgehäuses (30) bildet mit der Außenkontur der Magnetlagerspindelwelle (29) den Spaltraum (42), den Arbeitsraum der Welle.

Die Welle läuft berührungsfrei im Magnetlagerspindelgehäuse und ist im Betrieb verschleißfrei.

In das Magnetlagerspindelgehäuse (30) ist ein Spaltrohr (43) eingepasst. Das Spaltrohr (43) ist bevorzugt als Kragentopf ausgebildet und aus pharmagerechtem Kunststoff hergestellt. Es dichtet die im Magnetlagerspindelgehäuse (30) befindlichen Komponenten von Motor (32) und Lagern (33, 34, 35, 42) sowie Wegmesssysteme (36) gegen den Arbeitsraum (42) der Magnetlagerspindelwelle (29) ab. Das Spaltrohr (43) ist wahlweise so ausgeführt, dass es einen Anschluss (44) im Boden aufweist, worüber Reinigungs- und/oder Spülmedium zu- und abgeführt werden.

Die rohrförmige Ummantelung (45) der gestuft oder konisch sich verjüngend ausgeführten Magnetlagerspindelwelle (29) umschließt mit einer Presspassung die Distanzringe (46) und die Gegenkomponenten (38, 37, 39) und ist unlösbar mit der Kante des Wellenabsatzes und der Endkappe (35) verbunden. Die Ummantelung (45) besteht bevorzugt aus Edelstahl.

Ein Zwischenring (31) mit Spülmediumzuführung (48) ist mit dem Magnetlagerspindelgehäuse (30) über Verbindungselemente (49) gekoppelt und fixiert die axiale und radiale Lage des Spaltrohres (43). Die Einspannstelle des Spaltrohres (43) ist als Verdickung (50) ausgebildet und wirkt als Dichtung und Versteifung. Die Verdickung (51) wirkt ebenfalls als Versteifung. Über die Spülmediumzuführung (48) kann Spülluft in den axialen Spalt (52, 53) geführt werden, dadurch wird verhindert, dass Produkt aus dem produktberührten Bereich (54) in den Arbeitsraum der Magnetlagerspindelwelle dringt und umgekehrt.

Der Gegenring (55) zum Kragen (50) des Spaltrohres (43) ist im Mühlengehäuse (24) zentriert und wirkt mit dem Spülspalt (53) dichtend gegen den produktberührten Bereich (54) der Mühle.
Das Spaltrohr (43) weist Erhebungen (56 und 57) in radialer Richtung auf. Auf diesen liegt die Magnetlagerspindelwelle (29) auf, wenn der Magnetlagerspindelantrieb funktionslos ist. Die Erhebungen (56, 58, 57, 59) sind so bemessen, dass im Havariefall ihre Wirkflächen als Kontaktpunkte dienen, sie stellen Notlauflagerflächen dar.

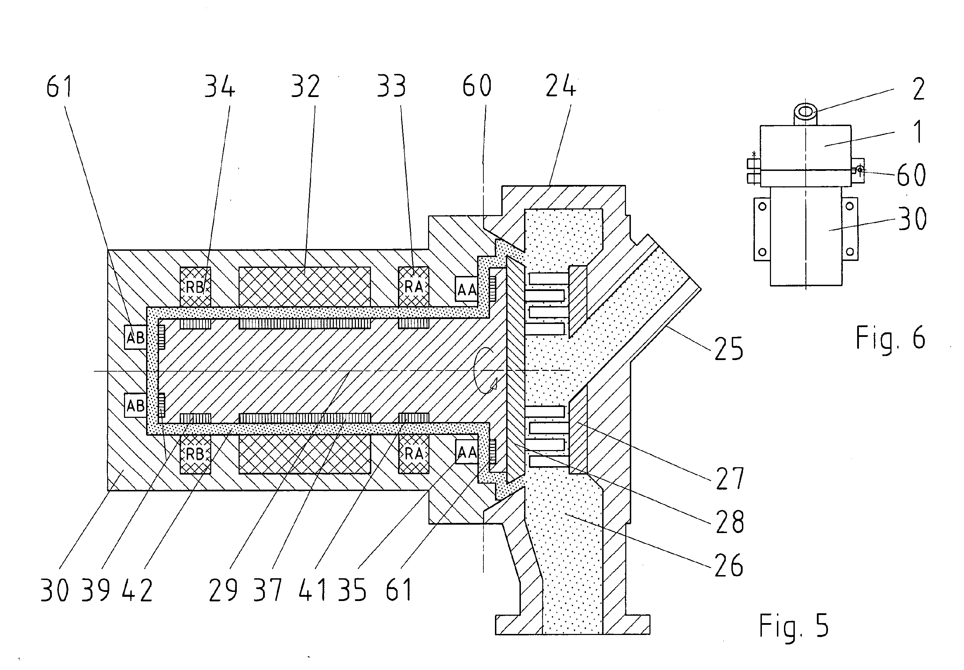

Fig. 5 zeigt als Beispiel für eine verfahrenstechnische Maschine eine Stiftmühle, die mit einem Magnetlagerspindelantrieb ausgerüstet ist. Die Mühle besteht aus einem Mühlengehäuse (24) mit Produkteinlauf (25) und Produktaustrag (26). Das Mühlengehäuse. (24) nimmt die statische Stiftscheibe (27) auf, die mit der dynamischen Stiftscheibe (28) auf der Magnetlagerspindelwelle (29) zusammenwirkt.

Der Magnetlagerspindelantrieb besteht aus einem Magnetlagerspindelgehäuse (30) und einer Magnetlagerspindelwelle (29). Die Magnetlagerspindelwelle (29) ist im Magnetlagerspindelgehäuse (30) im Zentrum angeordnet. Die Magnetlagerspindelwelle (29) nimmt an einer ihrer Stirnseiten im Zentrum die dynamische Stiftscheibe (28) auf. Die Welle (29) ist verjüngend gestuft ausgeführt, so kann sie durch Ziehen aus dem Magnetlagerspindelgehäuse (30) herausgenommen werden, ohne das Magnetspindellagergehäuse (30) zu zerlegen oder das Arbeitsteil (28) von der Welle (29) zu demontieren.

Die Fig. 6 zeigt die Mühle in der Draufsicht. Das Magnetlagerspindelgehäuse (30) und das Mühlengehäuse (24) sind über eine externe Achse (60) miteinander verbunden. Wird ein Schließmechanismus (hier nicht dargestellt) geöffnet, kann das Mühlengehäuse (24) zur Seite weggeschwenkt werden, dadurch wird der Zugang zur Welle (29) mit dem Mahlwerkzeug (28) freigegeben. Die verjüngend ausgeführte Magnetlagerspindelwelle (29) kann nun zusammen mit dem Werkzeug (28) aus dem Magnetlagerspindelgehäuse entnommen werden. Das Mühlengehäuse (24) kann einfach und gründlich gereinigt werden. Das Mahlwerkzeug (28) kann von der Welle (29) gelöst und gereinigt oder ausgetauscht werden. Welle (29) und Mahlwerkzeug (28) können aber auch einteilig gefertigt sein.

Die Erfindung ist nicht auf die in den Zeichnungen dargestellte und vorstehend ausführlich beschriebene Ausführung beschränkt.

## Patentansprüche

1. Anlage bestehend aus mindestens einer Mühle oder einem Sichter, mit im Arbeitsraum rotierendem Arbeitsteil, mit Lagerung und Antrieb sowie einer allen Anlagenkomponenten gemeinsamen nach außen dichten Hülle,
**dadurch gekennzeichnet, dass**
die allen Anlagenkomponenten gemeinsame nach außen dichte Hülle keine Drehdurchführungen aufweist, wobei das rotierende Arbeitsteil durch einen Magnetlagerspindelantrieb gelagert und angetrieben wird.

2. Anlage nach Anspruch 1 **dadurch kennzeichnet, dass** die Anlage Anschlüsse für Sperr-, Reinigungs- und Sterilisationsmedien vorsieht.

3. Anlage nach Anspruch 1 und 2, **dadurch gekennzeichnet, dass** der Magnetlagerspindelantrieb der Mühle oder des Sichter bestehend aus Magnetlagerspindelgehäuse und Magnetlagerspindelwelle ein Spaltrohr aufweist, dass das Magnetlagerspindelgehäuse hermetisch gegen den Arbeitsraum der Magnetlagerspindelwelle abdichtet und eine Ummantelung aufweist, die die Magnetlagerspindelwelle hermetische gegen den Spaltraum zwischen Magnetlagerspindelwelle und Magnetlagerspindelgehäuse abdichtet.

4. Anlage nach Anspruch 1 bis 3 **dadurch gekennzeichnet, dass** das Spaltrohr welches das Magnetlagerspindelgehäuse abdichtet als Kragentopf ausgebildet ist.

5. Anlage nach Anspruch 1 bis 4, **dadurch gekennzeichnet, dass** das Spaltrohr Erhebungen aufweist, die als Notlauflagerwirkflächen ausgebildet sind.

6. Anlage nach Anspruch 1 bis 5, **dadurch gekennzeichnet, dass** der Gegenring Erhebungen aufweist, die als Notlauflagerwirkflächen ausgebildet sind.

7. Anlage nach Anspruch 1 bis 6, **dadurch gekennzeichnet, dass** das Spaltrohr mit einem zentralen Anschuss für Zu- und Ablauf eines Sperr-, Reinigungs-, oder Sterilisationsmediums ausgeführt ist.

8. Anlage nach Anspruch 1 bis 7, **dadurch gekennzeichnet, dass** das Maschinengehäuse von Mühle oder Sichter nach öffnen eines Schließmechanismus gegen das Magnetlagerspindelgehäuse wegschwenkbar ist und das Arbeitsteil mit Magnetlagerspindelwelle durch ziehen aus dem Magnetlagerspindelgehäuse herausziehbar ist, ohne das Magnetlagerspindelgehäuse zu zerlegen oder Welle und Arbeitsteil zu demontieren.

9. Anlage nach einem der Ansprüchen 1 bis 8, **dadurch gekennzeichnet, dass** der Spaltraum, der Mühle oder des Sichters, der durch die Innenkontur des Magnetlagerspindelgehäuses und der Außenkontur der Magnetlagerspindelwelle beschrieben wird, durch ein Spülmedium vom Arbeitsraum in dem das rotierende Arbeitsteil angeordnet ist, getrennt ist.
